# FASCICULE DE BREVET EUROPEEN

(11) **EP 3 896 311 B1**
(45) Date de publication et mention de la délivrance du brevet: **29.11.2023**
(21) Numéro de dépôt: 21168029.3
(22) Date de dépôt: 13.04.2021
(51) Int. Cl.: F16H 57/04, F02C 7/06, F16C 17/02, F16H 57/08, F02C 7/36, F16H 57/021

(54) **DISPOSITIF DE TRANSFERT D'HUILE**
ÖLTRANSFERVORRICHTUNG
OIL TRANSFER DEVICE

(30) Priorité: 16.04.2020 FR 2003823
(43) Date de publication de la demande: 20.10.2021
(73) Titulaire: Safran Transmission Systems, 92700 Colombes (FR)
(72) Inventeur: SIMON, Adrien Louis, 77550 Moissy-Cramayel (FR); GEDIN, Patrice, Jocelyn, Francis, 77550 Moissy-Cramayel (FR); PAP, Bálint, 77550 Moissy-Cramayel (FR)
(74) Mandataire: Regimbeau

(56) Documents cités:
- EP-A1- 3 330 573
- FR-A1- 3 018 861
- US-A1- 2012 088 624
- US-A1- 2018 306 308

## Description

### DOMAINE DE L'INVENTION

La présente invention concerne une unité de transfert d'huile destinée à transférer de l'huile entre une partie fixe et une partie tournante et un procédé de lubrification d'un porte-satellites d'un train épicycloïdal utilisant un tel dispositif. En particulier, la description qui va suivre fait référence à une unité de transfert d'huile destinée à fournir de l'huile lubrifiante à un porte-satellites en rotation d'une transmission épicycloïdale dans une turbomachine.

### ETAT DE LA TECHNIQUE

D'une manière générale, le rôle d'un réducteur mécanique est de modifier le rapport de vitesse et le couple entre un axe d'entrée et un axe de sortie d'un mécanisme de transmission de puissance.

Les nouvelles générations de turbomachines à double flux, notamment celles ayant un haut taux de dilution, comportent un réducteur mécanique pour entraîner l'arbre d'une soufflante (aussi appelé fan). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou compound. Le plus généralement on distingue les trois architectures suivantes:
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champs magnétique.

Il existe plusieurs types d'engrènement par contact comme avec des dentures droites ou en chevron.

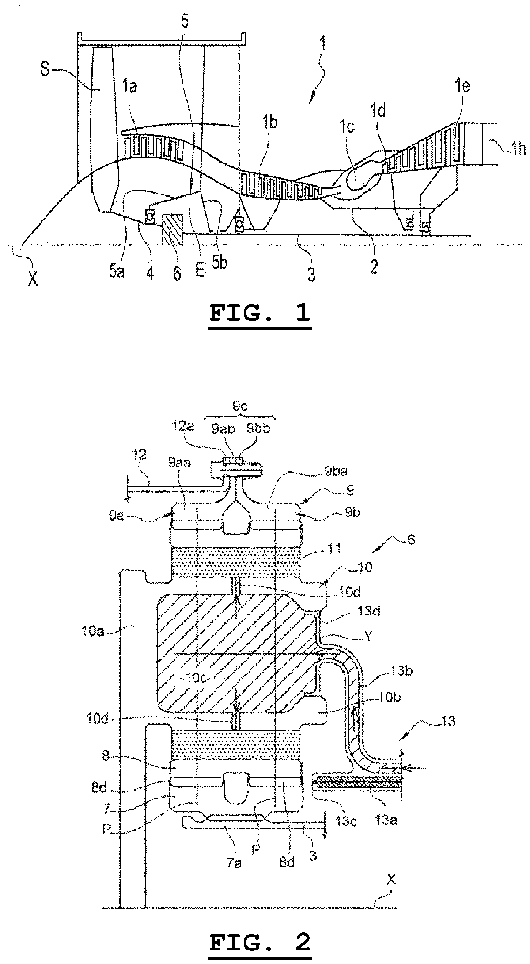

La figure 1 qui décrit une turbomachine 1 connue. La turbomachine 1 comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur est généralement de type planétaire ou épicycloïdal.

Bien que la description qui suit concerne un réducteur du type planétaire ou épicycloïdal, elle s'applique également à un différentiel mécanique dans lequel les trois composants, que sont le porte-satellites 10, la couronne 9 et le solaire 7, sont mobiles en rotation, la vitesse de rotation de l'un de ces composants dépendant notamment de la différence de vitesses des deux autres composants.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

La figure 2, décrit un réducteur 6 qui peut prendre la forme de différentes architectures selon si certaines pièces sont fixées ou en rotation. En entrée, le réducteur 6 est relié à l'arbre BP 3, par exemple par l'intermédiaire de cannelures 7a. Ainsi l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre solaire 7 et satellites 8. Le nombre de satellites 8 est généralement défini entre trois et sept pour ce type d'application.

L'ensemble des satellites 8 est maintenu par un châssis appelé porte-satellites 10. Chaque satellite 8 tourne autour de son propre axe Y, et engrène avec la couronne 9.

En sortie, l'architecture est la suivante:
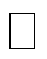 Dans une configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
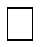 Dans une configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrostatique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes et de paliers égal au nombre de satellites. Pour des raisons de fonctionnement, de montage, de fabrication, de contrôle, de réparation ou de rechange les axes et le châssis peuvent être séparés en plusieurs pièces.

Pour les mêmes raisons citées précédemment, la denture d'un réducteur peut être séparée en plusieurs hélices. Dans l'exemple ici présenté, le réducteur présente plusieurs hélices avec une couronne séparée en 2 demi-couronnes:
□ Une demi-couronne avant 9a constituée d'une jante 9aa et d'une demi-bride de fixation 9ab. Sur la jante 9aa se trouve l'hélice avant de la denture du réducteur. Cette hélice avant engrène avec celle du satellite 8 qui engrène avec celle du solaire 7. 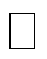
Une demi-couronne arrière 9b constituée d'une jante 9ba et d'une demi-bride de fixation 9bb. Sur la jante 9ba se trouve l'hélice arrière de la denture du réducteur. Cette hélice arrière engrène avec celle du satellite 8 qui engrène avec celle du solaire 7.

La demi-bride de fixation 9ab de la couronne avant 9a et la demi-bride de fixation 9bb de la couronne arrière 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné, par exemple.

Les flèches de la figure 2 décrivent l'acheminement de l'huile dans le réducteur 6. L'huile arrive dans le réducteur 6 depuis la partie stator 5 dans le distributeur 13 par différents moyens qui ne seront pas précisés dans cette vue car ils sont spécifiques à un ou plusieurs types d'architecture. Le distributeur est séparé en 2 parties en général chacune répétée du même nombre de satellite. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

Dans la plupart des applications telle que celle présentée en figure 2, le porte-satellites est de type statique et est couplé à un châssis fixe du moteur par un élément flexible. Dans ces conditions, les composants supportés par le porte-satellites (engrenages planétaires, roulements possibles, etc.) sont lubrifiés sans difficulté via des conduits fixés par rapport au bâti moteur et au porte-satellites.

Dans ces cas, une unité de transfert d'huile est généralement prévue pour transférer l'huile de lubrifiant de manière efficace et fiable d'une partie statique à une partie tournante connectée au porte-satellites. De telles unités de transfert d'huile sont généralement appelées "paliers de transfert d'huile" ou "raccords tournants". L'unité fournit de l'huile sous pression dans une chambre annulaire définie par un manchon qui est fixé au porte-satellites. De cette chambre annulaire, l'huile sous pression s'écoule vers les composants nécessitant une lubrification.

Une telle unité de transfert d'huile est par exemple connue de FR 3 018 861 A1.

En particulier, Certaines applications comme les soufflantes à pas variable nécessitent un transfert d'huile avec une pression de l'ordre de 100 bars, ce qui pose des problèmes d'étanchéité.

En effet, les dispositifs actuels ne permettent pas d'offrir simplement une étanchéité acceptable pour ce type de pression. Il s'en suit des fuites d'huiles qui à terme altèrent la lubrification du train épicycloïdal et diminuent la durée de vie de l'ensemble.

Dans ce contexte, il est nécessaire d'avoir un dispositif de transfert d'huile pour lubrifier un porte satellite d'un train épicycloïdal, qui permettent des transferts d'huile à haute pression tout en améliorant l'étanchéité et la durée de vie.

### EXPOSE DE L'INVENTION

Selon un premier aspect, l'invention propose un dispositif de transfert d'huile pour lubrifier un porte-satellites mobile en rotation d'un train épicycloïdal pour une turbomachine, le dispositif s'étendant autour d'un axe et présentant:
- un carter annulaire qui s'étend autour de l'axe, le carter comprenant une pluralité de gorges d'acheminement d'huile, axialement juxtaposées, présentant chacune une ouverture d'éjection d'huile configurée pour déboucher radialement vers un circuit de lubrification du porte-satellites à lubrifier. Une des gorges d'acheminement d'huile est une gorge d'acheminement d'huile à haute pression, dite gorge haute pression, et une autre des autres gorges d'acheminement d'huile est une gorge d'acheminement d'huile à basse pression, dite gorge basse pression, axialement juxtaposée à la gorge haute pression, les gorges étant axialement agencées le long de l'axe pour que de l'huile puisse être transférée axialement de la gorge haute pression vers la gorge basse pression.

Le dispositif comprend une gorge haute pression située axialement entre deux gorge basse pression.

Le dispositif peut comprendre des moyens de guidage en rotation du dispositif autour de l'axe et les moyens de guidage en rotation peuvent comprendre au moins un palier lisse qui s'étend au droit d'une cloison séparant deux gorges axialement juxtaposées, pour guider en rotation le dispositif autour de l'axe et pour permettre un transfert d'huile de la gorge haute pression vers la gorge basse pression le long du palier lisse.

Le circuit de lubrification du porte-satellites peut comprendre au moins un canal d'alimentation haute pression agencé pour être d'alimenté en huile par une gorge haute pression et au moins un canal d'alimentation en huile basse pression agencé pour être d'alimenté en huile par une gorge basse pression.

Le dispositif peut comprendre un canal commun haute pression agencé pour être alimenté par plusieurs gorges haute pression et/ou un canal commun basse pression agencé pour être alimenté par plusieurs gorges basse pression.

Le dispositif peut comprendre, pour chaque gorge, au moins une ouverture d'éjection d'huile principalement radiale pour acheminer de l'huile de ladite gorge vers le train épicycloïdal.

Selon un autre aspect l'invention propose un procédé de lubrification d'un porte-satellites d'un train épicycloïdal utilisant un dispositif selon l'invention, comprenant les étapes suivantes:
(a) injection d'huile à une première pression, dite haute pression dans une gorge haute pression et injection d'huile à une deuxième pression, dite basse pression, inférieure à la haute pression dans les gorges basse pression;
(b) transfert d'huile circulant de la gorge haute pression vers la gorge basse pression juxtaposée axialement à la gorge haute pression;
(c) transfert de l'huile circulant dans les gorges pour alimenter en huile le porte-satellites.

L'étape (b) peut comprendre une étape de traversée de l'huile le long d'un palier lisse de guidage en rotation du porte-satellites.

Selon un autre aspect, l'invention propose une turbomachine comprenant au moins un dispositif l'invention.

Selon un autre aspect l'invention propose un aéronef comprenant au moins une turbomachine selon l'invention.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels:
La figure 1 est une vue en coupe partielle, d'une turbomachine selon l'art antérieur.
La figure 2 est une vue en en coupe d'un réducteur selon l'art antérieur.

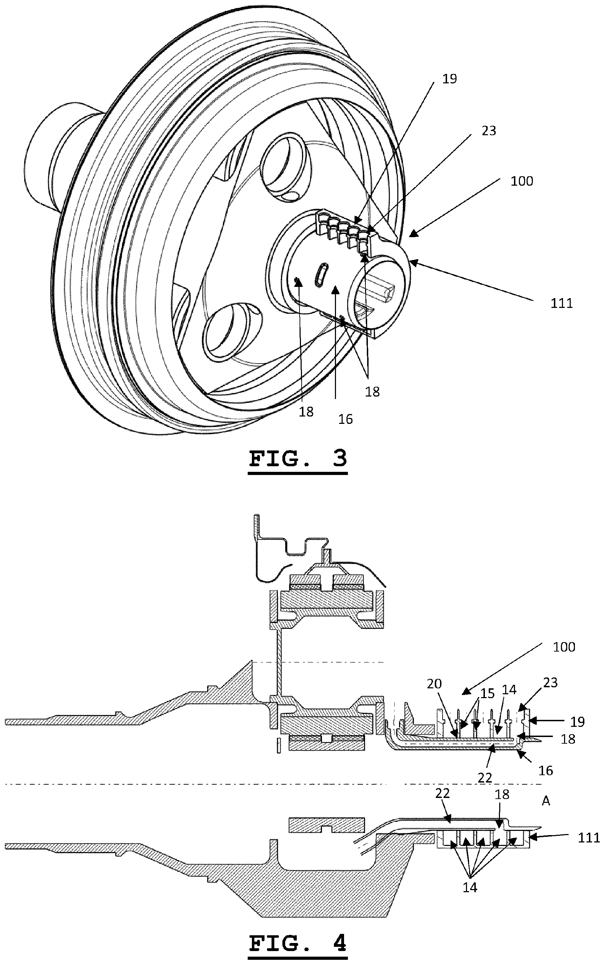

La figure 3 est une vue en perspective, en coupe partielle, d'un dispositif selon l'invention positionné autour d'un train épicycloïdal.
La figure 4 est une en coupe d'un dispositif selon l'invention positionné autour d'un train épicycloïdal.
La figure 5 est une vue en en perspective, en coupe, d'un dispositif selon un mode de réalisation de l'invention.
La figure 6 est une en coupe partielle d'un dispositif selon un mode de réalisation de l'invention.
La figure 7 est une en coupe partielle d'un dispositif selon un mode de réalisation de l'invention.
La figure 8 est une vue en coupe partielle d'un dispositif selon le même mode de réalisation que la figure 7.
La figure 9 est une en coupe partielle d'un dispositif selon un mode de réalisation de l'invention.
La figure 10 est une en coupe partielle d'un dispositif selon un mode de réalisation de l'invention.

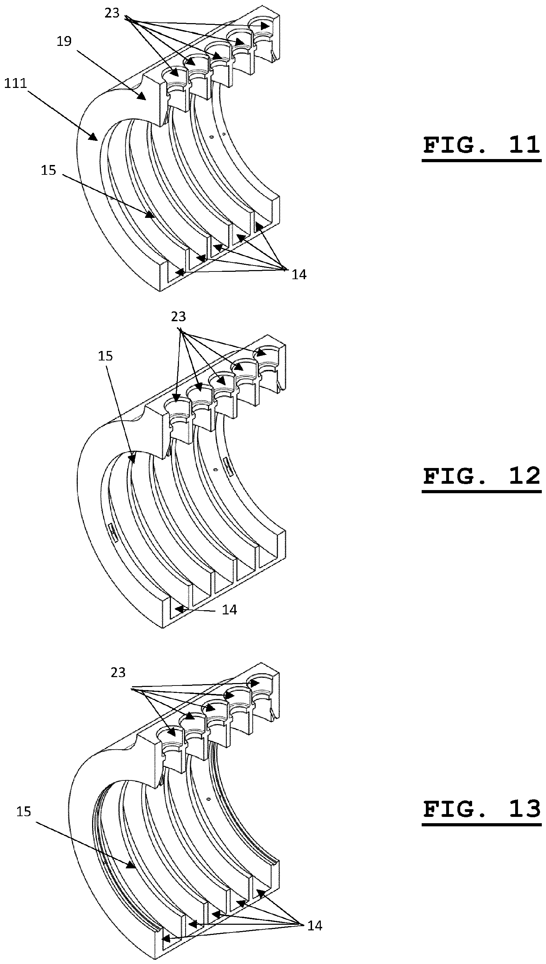

La figure 11 est une vue en en perspective, en coupe, d'un dispositif selon un mode de réalisation de l'invention.
La figure 12 est une vue en en perspective, en coupe, d'un dispositif selon un mode de réalisation de l'invention.
La figure 13 est une en coupe partielle d'un dispositif selon un mode de réalisation de l'invention.

Sur l'ensemble des figures, les éléments similaires portent des références identiques.

### DESCRIPTION DETAILLEE DE L'INVENTION

### Architecture

D'une manière générale, l'invention concerne un dispositif 100 de transfert d'huile pour lubrifier un porte satellites d'un train épicycloïdale pour une turbomachine. D'une manière connue, un train épicycloïdal comprend un engrenage (i.e. une roue dentée) planétaire, en rotation autour d'un axe longitudinal. Un ou plusieurs engrenages satellites sont adaptés pour engrener l'engrenage planétaire. L'ensemble de ce train d'engrenage est positionné dans une couronne dentée, à denture intérieure, appelée porte satellite. Le porte satellite contient et engrène les satellites. Les vitesses de rotations des différents éléments les uns par rapport aux autres, nécessite une lubrification. Plus particulièrement, dans certaines applications, il est nécessaire que cette lubrification soit effectuée à haute pression (i.e. une pression supérieure ou égale à 100 bars).

Le dispositif 100 comprend un carter 111 annulaire. Typiquement, le carter 111 peut enserrer (via des paliers lisses 22 et une bague intérieure 16) un arbre rotatif portant un engrenage planétaire du porte satellite.

D'une manière avantageuse, le carter 111 peut être une pièce de révolution, annulaire, autour d'un axe A.

Typiquement, en condition d'utilisation, l'axe A peut être confondu avec l'axe longitudinal du porte satellite.

Le carter 111 peut par exemple être obtenu par moulage d'un métal ou d'un matériau composite, puis repris en usinage.

Le carter 111 présente une pluralité de gorges 14. Les gorges définissent des tranchées annulaires dans le carter 111, séparées par des cloisons 15. Les gorges 14 sont des gorges d'acheminement d'huile.

Les gorges 14 sont axialement juxtaposées à l'intérieur du carter 111. Ainsi, en parcourant le carter 111 selon l'axe A, on rencontre successivement, en alternance, une gorge 14, une cloison 15, une gorge 14, une cloison 15, etc. En d'autres termes, les gorges 14 définissent une succession de sous-zones annulaires à l'intérieur du carter 111.

Les gorges 14 sont une disposition technique particulièrement avantageuse de l'invention dont la fonction sera développée ci-après.

Le carter 111 présente en outre une pluralité d'ouvertures d'éjection 23 pour éjecter de l'huile circulant dans les gorges 14 vers le porte-satellite pour le lubrifier.

Selon les modes de réalisation ici présentés, les ouvertures d'éjection 23 sont chacune positionnée dans une nervure 19 radiale.

En sus, le dispositif 100 comprend une bague intérieure 16 adaptée pour enserrer directement un arbre rotation du train épicycloïdal. La bague intérieure 16 présente une pluralité de canaux d'alimentation 22 permettant chacun d'alimenter en huile au moins une gorge 14. Chaque canal 22 traverse la bague intérieure 16 et débouche dans au moins une ouverture d'alimentation 18.

La bague intérieure 16 est libre en rotation, autour de l'axe A, par rapport au carter 1. En effet, tel que cela sera développé ci-après, en conditions d'utilisation, la bague intérieur 16 est montée serrée autour d'un porte satellite de sorte qu'elle tourne avec le porte satellite. Alors que, le carter 111 est sensiblement immobile ou présente une vitesse de rotation différente de celle de la bague intérieure 16.

Le guidage en rotation de la bague intérieure 16 par rapport au carter 111 est assuré par une pluralité de paliers lisses 20. Les paliers lisses 20 sont des anneaux positionnés chacun entre une cloison 15 et la bague intérieure 16.

Les paliers lisses sont une disposition particulièrement avantageuse de l'invention qui sera développée ci-après.

### Agencement et fonctionnement des gorges

Comme énoncé précédemment, le dispositif 100 comprend une pluralité de gorges 14. Les gorges 14 sont adaptées pour recevoir et acheminer de l'huile.

Le dispositif 100 comprend au moins une gorge 14a dite gorge haute pression, adaptée pour recevoir de l'huile à haute pression. Le dispositif 100 comprend aussi des gorges 14b dite gorges basse pression, adaptée pour recevoir de l'huile à basse pression.

Il peut y avoir une pluralité de gorges haute pression 14a et il y a une pluralité de gorges basse pression 14b, et avantageusement, chaque gorge 14 est une gorge haute pression 14a ou une gorge basse pression 14b.

On comprendra que les notions de « basse pression » et de « haute pression » sont ici relatives, de sorte que la pression d'huile reçue dans une gorge haute pression 14a est toujours sensiblement plus élevée que la pression d'huile reçue dans une gorge basse pression 14b.

Il est précisé, que par haute pression, il est préférentiellement entendu de l'huile à une pression minimum de 80 bars et préférentiellement à une pression de 100 bars.

Par basse pression, il est préférentiellement entendu de l'huile à une pression maximum de 80 bars et préférentiellement à une pression de 10bars.

Il est précisé que la pression d'huile n'est pas nécessairement identique dans deux gorges hautes pression 14a ou dans deux gorge basse pression 14b, mais l'écart relatif de pression entre deux gorges basse pression 14b ou deux gorges haute pression 14a sera toujours sensiblement inférieur à l'écart relatif de pression entre une gorge basse pression 14b et une gorge haute pression 14a (au moins un facteur 10).

Ainsi, tel que cela sera développé ci-après, une gorge basse pression 14b comprise axialement (le long de l'axe A) entre deux gorges haute pression 14a peut présenter une pression d'huile supérieure à la pression de l'huile circulant dans une gorge basse pression 14b voisine axialement d'une seule gorge haute pression. Néanmoins, dans les deux cas, on considère avoir d'une part de l'huile basse pression et d'autre part de l'huile haute pression. En effet, le différentiel entre haute et basse pression est tel que les variations de pression entre plusieurs gorges basse pression n'ont pas d'incidence.

Comme indiqué précédemment, les gorges 14 sont axialement juxtaposées. Plus précisément, chaque gorge basse pression 14b est mitoyenne d'au moins une gorge haute pression 14a. En d'autres termes, en parcourant le dispositif 100 selon l'axe A on trouve, par exemple, au moins une gorge basse pression 14b, puis une cloison 15, puis une gorge haute pression 14a.

Cet agencement (une gorge haute pression 14b mitoyenne d'une gorge basse pression 14b) est un pattern de base de l'invention. Ce pattern peut être décliné de différentes manières, dont quelques exemples sont présentés sur les figures.

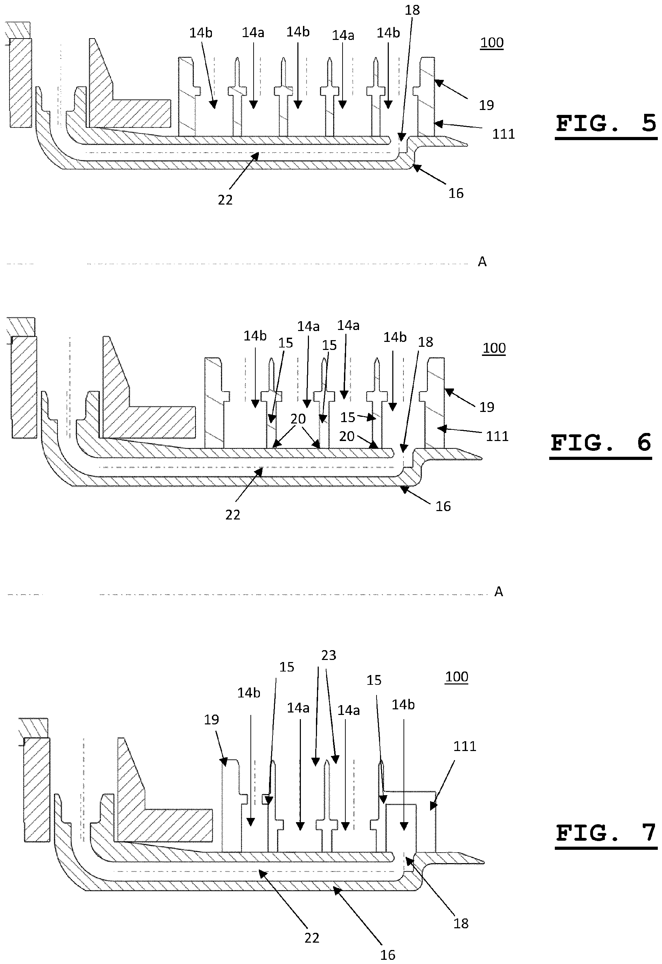

Ainsi, comme représenté en figure 5, le dispositif 100 peut comprendre deux gorges haute pression 14a mitoyennes chacune de deux gorges basse pression 14, pour un nombre total de cinq gorges. En d'autres termes, en parcourant la figure 5 de gauche à droite selon l'axe A, on a une gorge basse pression 14b, une cloison 15, une gorge haute pression 14a, une cloison 15, une gorge basse pression 14b, une cloison 15, une gorge haute pression 14a, une cloison 15, une gorge basse pression 14b.

Selon le mode de réalisation présenté aux figures 6, 7 et 8, le dispositif comprend deux gorges haute pression 14a voisines, encadrées axialement par deux gorges basse pression 14b. En d'autres termes, en parcourant la figure 6 de gauche à droite selon l'axe A, on a une gorge basse pression 14b, une cloison 15, une gorge haute pression 14a, une cloison 15, une gorge haute pression 14a, une cloison 15, une gorge basse pression 14b.

Tel que cela sera décrit ci-après, le dispositif 100 est conçu pour que de l'huile puisse être transféré entre deux gorges 14 mitoyennes.

### Paliers lisses

Comme indiqué précédemment, la bague intérieure 16 est en rotation par rapport au carter 1. Le guidage en rotation est effectué par des paliers lisses 20. Les paliers lisses 20 sont notamment positionnés entre les cloisons 15 et la bague intérieure 16. Sur les figures les paliers lisses ne sont pas explicitement représentés, la référence 20 indiquant leurs emplacements. Il s'agit d'une simplification illustrative, l'homme du métier pouvant aisément en déduire le montage des paliers lisses 20. Les règles de montage des paliers lisses (ajustement serré sur l'un des élément et jeu avec l'autre élément) et la nature de leur matériau constitutif permettent un transfert d'huile entre deux gorges 14.

Plus précisément, lorsqu'une pression d'huile importante est appliquée axialement sur un palier lisse 20, dans le contexte de montage de l'invention, le palier lisse 20 laisse circuler un faible débit axial d'huile. Il s'agit là d'une disposition particulièrement avantageuse de l'invention qui sera détaillée plus spécifiquement ultérieurement.

### Canaux d'alimentation

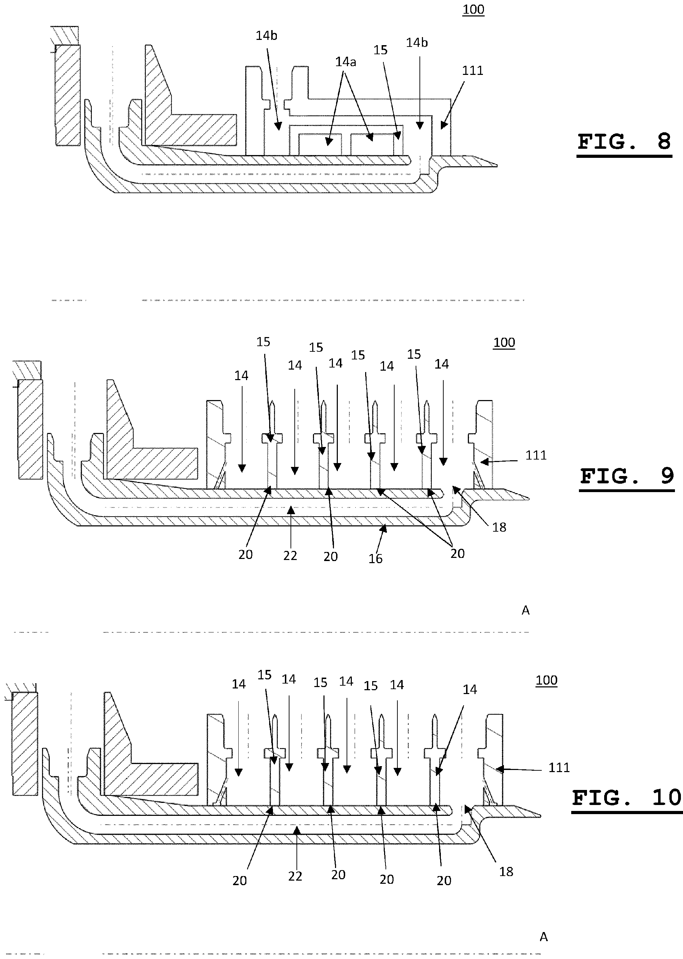

D'une manière générale, chaque gorge 14 est alimentée en huile par un canal d'alimentation 22, et chaque canal peut alimenter plusieurs gorges. Comme cela est visible sur les figures, un même canal d'alimentation peut alimenter une seule gorge 14, ou plusieurs gorges 14. Ainsi, en référence aux figures 7 et 8 un même canal d'alimentation 22 peut alimenter deux gorges 14, dans ce cas les gorges 14 alimentées par un même canal d'alimentation 22 sont des gorges 14 de même pression (isobares). En d'autres termes, un même canal d'alimentation 22 peut être alimenté par deux gorges haute pression 14a ou deux gorges basse pression 14b. En outre, tel que représenté sur les figures 7 et 8, deux gorges 14 qui alimentent le même canal 22 peuvent être voisines ou séparées axialement (i.e. une ou plusieurs gorge 14 de pression différente étant intercalée axialement entre lesdites deux gorges 14 qui alimentent le canal 22).

### Fonctionnement

En condition de fonctionnement, de l'huile est injectée dans les canaux 22. Ainsi, de l'huile à haute pression est injectée, dans les gorges haute pression 14a et de l'huile à basse pression est injectée dans les gorges basse pression 14b et s'écoule sur le train épicycloïdal via les ouvertures d'éjection 18 de la bague intérieure 16.

La pression exercée par l'huile dans les gorges haute pression 14a et sur les paliers lisses 20. Lorsque la pression dépasse un certain seuil, l'huile s'infiltre en le palier lisse 20 et la cloison 15 pour s'écouler dans une gorge basse pression 14b voisine. Ce fonctionnement particulièrement avantageux permet d'éviter les pertes d'huile, celles-ci étant récupérées dans les gorges basse pression 14b.

On comprendra que lorsqu'une gorge basse pression 14b est positionnées entre deux gorge haute pression 14a, elle récupère de l'huile issue desdites deux gorges hautes pression 14a et sa pression en est d'autant augmentée.

Ainsi, le pattern d'une gorge haute pression 14a accolée à une gorge basse pression 14b permet d'avoir une lubrification à haute pression, sans perdre d'huile et sans avoir à mettre en oeuvre une étanchéité dynamique complexe.

### Procédé

Selon un autre aspect, l'invention concerne un procédé de lubrification d'un porte satellite d'un train épicycloïdal utilisant un dispositif 100 selon l'invention et comprenant les étapes suivantes:
(a) injection d'huile à haute pression dans ladite au moins une gorge haute pression 14a et injection d'huile à basse pression dans lesdites gorges basse pression 14b;
(b) transfert d'huile circulant dans ladite au moins une gorge haute pression 14a vers la gorge basse pression 14b juxtaposée à ladite au moins une gorge haute pression 14a;
(c) transfert de l'huile circulant dans les gorges au porte satellite train épicycloïdal.

On comprendra que chacun de ces « transferts » se fait automatiquement du fait des différentiels de pression et de la porosité des paliers lisses, aucun moyen actif n'est impliqué.

Selon une disposition avantageuse, l'étape (b) comprend ainsi une étape de traversée d'un palier lisse 20 par l'huile.

### Turbomachine et Aéronef

Selon un autre aspect, l'invention concerne une turbomachine comprenant au moins un dispositif 100 selon l'invention.

Selon un autre aspect, l'invention concerne un aéronef comprenant au moins une turbomachine comprenant au moins un dispositif 100 selon l'invention.

## Revendications

1. Dispositif (100) de transfert d'huile pour lubrifier un porte-satellites mobile en rotation d'un train épicycloïdal pour une turbomachine, le dispositif (100) s'étendant autour d'un axe (A) et présentant:
- un carter (111) annulaire qui s'étend autour de l'axe (A), le carter (111) comprenant une pluralité de gorges (14) d'acheminement d'huile, axialement juxtaposées, présentant chacune une ouverture d'éjection d'huile principalement radiale pour acheminer de l'huile de ladite gorge (14) vers le train épicycloïdal,
les gorges (14) comprenant au moins une première gorge, dite gorge haute pression (14a), pour l'acheminement d'huile à une première pression, dite haute pression, et au moins une deuxième gorge, dite gorge basse pression (14b), pour l'acheminement d'huile à une deuxième pression, dite basse pression, inférieure à la haute pression,
au moins une gorge basse pression (14b) étant axialement juxtaposée à au moins une gorge haute pression (14a), les gorges (14) étant axialement agencées le long de l'axe (A) pour que de l'huile puisse être transférée axialement de la gorge haute pression (14a) vers la gorge basse pression (14b), le dispositif (100) étant **caractérisé en ce qu'**une gorge haute pression (14a) est située axialement entre deux gorges basse pression (14b).

2. Dispositif (100) selon la revendication 1, comprenant une bague intérieure (16) libre en rotation, autour de l'axe (A), par rapport au carter (111), et des moyens de guidage en rotation de la bague intérieure (16) par rapport au carter (111), les moyens de guidage en rotation comprenant au moins un palier lisse (20) qui s'étend au droit d'une cloison (15) séparant deux gorges (14) axialement juxtaposées, pour guider en rotation la bague intérieure (16) autour de l'axe (A) et pour permettre un transfert d'huile de la gorge haute pression (14a) vers la gorge basse pression (14b) juxtaposée à ladite gorge haute pression (14a) par infiltration le long du palier lisse (20).

3. Dispositif (100) selon la revendication 1 ou 2, comprenant au moins un canal (22) d'alimentation haute pression agencé pour être d'alimenté en huile par au moins une gorge haute pression (14b) et au moins un canal (22) d'alimentation en huile basse pression agencé pour être d'alimenté en huile par au moins une gorge basse pression (14b).

4. Dispositif (100) selon la revendication 2, dans lequel la bague intérieure (16) comprend au moins un canal (22) d'alimentation haute pression agencé pour être d'alimenté en huile par au moins une gorge haute pression (14b) et au moins un canal (22) d'alimentation en huile basse pression agencé pour être d'alimenté en huile par au moins une gorge basse pression (14b).

5. Dispositif (100) selon la revendication 3 ou 4, dans lequel un canal (22) d'alimentation haute pression est un canal commun haute pression (22) agencé pour être alimenté par plusieurs gorges haute pression (14a) et/ou un canal (22) d'alimentation en huile basse pression est un canal commun basse pression (22) agencé pour être alimenté par plusieurs gorges basse pression (14b).

6. Procédé de lubrification d'un porte-satellites d'un train épicycloïdal utilisant un dispositif (100) selon l'une quelconque des revendication 1 à 5, comprenant les étapes suivantes :
(a) injection d'huile à une première pression, dite haute pression, dans une gorge haute pression (14a) et injection d'huile à une deuxième pression, dite basse pression, inférieure à la haute pression, dans les gorges basse pression (14b);
(b) transfert d'huile circulant de la gorge haute pression (14a) vers la gorge basse pression (14b) juxtaposée axialement à la gorge haute pression (14a);
(c) transfert de l'huile circulant dans les gorges pour alimenter en huile le porte-satellites.

7. Procédé selon la revendication 6 dans lequel le dispositif (100) comprend une bague intérieure (16) libre en rotation, autour de l'axe (A), par rapport au carter (111), et au moins un palier lisse (20) pour le guidage en rotation de la bague intérieure (16) par rapport au carter (111), l'étape (b) comprenant une étape de traversée de l'huile le long du palier lisse (20).

8. Turbomachine comprenant au moins un dispositif (100) selon l'une quelconque des revendications 1 à 5.

9. Aéronef comprenant au moins une turbomachine (100) selon la revendication 8.

## Patentansprüche

1. Vorrichtung zur Übertragung (100) von Öl zum Schmieren eines sich drehenden mobilen Planetenradträgers eines Umlaufrädergetriebes für eine Turbomaschine, wobei sich die Vorrichtung (100) um eine Achse (A) erstreckt und aufweist:
- ein ringförmiges Gehäuse (111), das sich um die Achse (A) erstreckt, wobei das Gehäuse (111) eine Vielzahl von axial nebeneinander liegenden Ölleitungsnuten (14) umfasst, die jeweils eine grundsätzlich radiale Ölausstoßöffnung aufweisen, um Öl von der Nut (14) zum Umlaufrädergetriebe zu leiten,
wobei die Nuten (14) mindestens eine erste Nut, Hochdrucknut (14a) genannt, zum Leiten von Öl mit einem ersten Druck, Hochdruck genannt, und mindestens eine zweite Nut, Niederdrucknut (14b) genannt, zum Leiten von Öl mit einem zweiten Druck, Niederdruck genannt, der niedriger ist als der Hochdruck, umfassen,
wobei mindestens eine Niederdrucknut (14b) axial neben mindestens einer Hochdrucknut (14a) liegt, wobei die Nuten (14) axial entlang der Achse (A) angeordnet sind, so dass Öl axial von der Hochdrucknut (14a) in die Niederdrucknut (14b) übertragen werden kann, wobei die Vorrichtung (100) **dadurch gekennzeichnet ist, dass** sich eine Hochdrucknut (14a) axial zwischen zwei Niederdrucknuten (14b) befindet.

2. Vorrichtung (100) nach Anspruch 1, die einen Innenring (16), der um die Achse (A) in Bezug auf das Gehäuse (111) frei drehbar ist, und Mittel zur Führung der Drehung des Innenrings (16) in Bezug auf das Gehäuse (111) umfasst, wobei die Mittel zur Führung der Drehung mindestens ein Gleitlager (20) umfassen, das sich rechtwinklig zu einer Trennwand (15) erstreckt, die zwei axial nebeneinander liegende Nuten (14) trennt, um den Innenring (16) drehbar um die Achse (A) zu führen und eine Ölübertragung von der Hochdrucknut (14a) zur Niederdrucknut (14b), die neben der Hochdrucknut (14a) liegt, durch Versickern entlang des Gleitlagers (20) zu ermöglichen.

3. Vorrichtung (100) nach Anspruch 1 oder 2, die mindestens einen Hochdruckversorgungskanal (22), der angeordnet ist, um durch mindestens eine Hochdrucknut (14b) mit Öl versorgt zu werden, und mindestens einen Niederdruckölversorgungskanal (22), der angeordnet ist, um durch mindestens eine Niederdrucknut (14b) mit Öl versorgt zu werden, umfasst.

4. Vorrichtung (100) nach Anspruch 2, wobei der Innenring (16) mindestens einen Hochdruckversorgungskanal (22), der angeordnet ist, um durch mindestens eine Hochdrucknut (14b) mit Öl versorgt zu werden, und mindestens einen Niederdruckölversorgungskanal (22), der angeordnet ist, um durch mindestens eine Niederdrucknut (14b) mit Öl versorgt zu werden, umfasst.

5. Vorrichtung (100) nach Anspruch 3 oder 4, wobei ein Hochdruckversorgungskanal (22) ein gemeinsamer Hochdruckkanal (22) ist, der angeordnet ist, um durch mehrere Hochdrucknuten (14a) versorgt zu werden, und/oder ein Niederdruckölversorgungskanal (22) ein gemeinsamer Niederdruckkanal (22) ist, der angeordnet ist, um durch mehrere Niederdrucknuten (14b) versorgt zu werden.

6. Verfahren zum Schmieren eines Planetenradträgers eines Umlaufrädergetriebes unter Verwendung einer Vorrichtung (100) nach einem der Ansprüche 1 bis 5, das die folgenden Schritte umfasst:
(a) Injektion von Öl mit einem ersten Druck, Hochdruck genannt, in eine Hochdrucknut (14a), und Injektion von Öl mit einem zweiten Druck, Niederdruck genannt, der niedriger ist als der Hochdruck, in die Niederdrucknuten (14b);
(b) Übertragung von Öl, das von der Hochdrucknut (14a) zur Niederdrucknut (14b) zirkuliert, die axial neben der Hochdrucknut (14a) liegt;
(c) Übertragung von Öl, das in den Nuten zirkuliert, um den Planetenradträger mit Öl zu versorgen.

7. Verfahren nach Anspruch 6, wobei die Vorrichtung (100) einen Innenring (16), der um die Achse (A) in Bezug auf das Gehäuse (111) frei drehbar ist, und mindestens ein Gleitlager (20) zur Führung der Drehung des Innenrings (16) in Bezug auf das Gehäuse (111) umfasst, wobei der Schritt (b) einen Schritt des Durchgangs des Öls entlang des Gleitlagers (20) umfasst.

8. Turbomaschine, die mindestens eine Vorrichtung (100) nach einem der Ansprüche 1 bis 5 umfasst.

9. Luftfahrzeug, der mindestens eine Turbomaschine (100) nach Anspruch 8 umfasst.

## Claims

1. An oil transfer device (100) for lubricating a rotatable planet carrier of an epicyclic gear train for a turbomachine, the device (100) extending around an axis (A) and having:
- an annular casing (111) extending around the axis (A), the casing (111) comprising a plurality of axially juxtaposed oil feed grooves (14), each having a predominantly radial oil ejection opening for leading oil from said groove (14) to the epicyclic gear train,
the grooves (14) comprising at least one first groove, referred to as a high-pressure groove (14a), for conveying oil at a first pressure, referred to as high-pressure, and at least one second groove, referred to as a low-pressure groove (14b), for conveying oil at a second pressure, referred to as low-pressure, lower than the high-pressure,
at least one low-pressure groove (14b) being axially juxtaposed to at least one high-pressure groove (14a), the grooves (14) being axially arranged along the axis (A) so that oil can be transferred axially from the high-pressure groove (14a) to the low-pressure groove (14b), the device (100) being **characterized in that** a high-pressure groove (14a) is located axially between two low-pressure grooves (14b).

2. Device (100) according to claim 1, comprising an inner ring (16) free to rotate, about the axis (A), relative to the casing (111) , and means for guiding the inner ring (16) in rotation relative to the casing (111) , the means for guiding in rotation comprising at least one plain bearing (20) which extends at right angles to a partition (15) separating two axially juxtaposed grooves (14), to guide the inner ring (16) in rotation about the axis (A) and to enable a transfer of oil from the high-pressure groove (14a) to the low-pressure groove (14b) juxtaposed with said high-pressure groove (14a) by infiltration along the plain bearing (20) .

3. Device (100) according to claim 1 or 2, comprising at least one high-pressure supply channel (22) arranged to be supplied with oil by at least one high-pressure groove (14b) and at least one low-pressure oil supply channel (22) arranged to be supplied with oil by at least one low-pressure groove (14b).

4. Device (100) according to claim 2, wherein the inner ring (16) comprises at least one high-pressure supply channel (22) arranged to be supplied with oil by at least one high-pressure groove (14b) and at least one low-pressure oil supply channel (22) arranged to be supplied with oil by at least one low-pressure groove (14b) .

5. Device (100) according to claim 3 or 4, wherein a high-pressure supply channel (22) is a common high-pressure channel (22) arranged to be supplied by a plurality of high-pressure grooves (14a) and/or a low-pressure oil supply channel (22) is a common low-pressure channel (22) arranged to be supplied by a plurality of low-pressure grooves (14b).

6. Method of lubricating a planet carrier of an epicyclic gear train using a device (100) according to any one of claims 1 to 5, comprising the following steps:
(a) injection of oil at a first pressure, called high pressure, into a high pressure groove (14a) and injection of oil at a second pressure, called low pressure, lower than the high pressure, into the low pressure grooves (14b);
(b) transfer of oil circulating from the high-pressure groove (14a) to the low-pressure groove (14b) axially juxtaposed to the high-pressure groove (14a);
(c) transfer of oil circulating in the grooves to supply the planet carrier with oil .

7. Method according to claim 6 in which the device (100) comprises an inner ring (16) free to rotate, about the axis (A), with respect to the casing (111), and at least one plain bearing (20) for rotationally guiding the inner ring (16) with respect to the casing (111) , step (b) comprising a step of passing the oil along the plain bearing (20).

8. Turbomachine comprising at least one device (100) according to any one of claims 1 to 5.

9. Aircraft comprising at least one turbomachine (100) according to claim 8.
